Europäisches Patentamt

(19) **European Patent Office**

Office européen des brevets

(11) Numéro de publication: **0 233 091**
**B1**

(12) # FASCICULE DE BREVET EUROPEEN

(45) Date de publication du fascicule du brevet:
**11.04.90**

(21) Numéro de dépôt: **87400018.5**

(22) Date de dépôt: **07.01.87**

(51) Int. Cl.⁴: **C03B 37/14**, B23K 26/02,
G02B 6/38

(54) **Dispositif de focalisation d'un faisceau de lumière et machine à souder les fibres optiques utilisant ce dispositif.**

(30) Priorité: **09.01.86 FR 8600219**

(43) Date de publication de la demande:
**19.08.87 Bulletin 87/34**

(45) Mention de la délivrance du brevet:
**11.04.90 Bulletin 90/15**

(84) Etats contractants désignés:
**BE CH DE GB IT LI NL SE**

(56) Documents cités:
**EP-A- 0 116 933**
**US-A- 4 058 699**

**ELECTRONICS LETTERS,**
**vol. 19, no. 2, 20 janvier 1983, pages 54-55, Londres, GB;**
**RIVOALLAN et al.: "Monomode fibre fusion splicing**
**with CO2 laser"**

(73) Titulaire: **Rivoallan, Loïc, Tossen Hat Kermoroc'h,**
**F-22140 Begard(FR)**
Titulaire: **Guilloux, Jean-Yvon, 12 Chemin de Convenant**
**Ar Groas, F-22560 Trebeurden(FR)**

(72) Inventeur: **Rivoallan, Loïc, Tossen Hat Kermoroc'h,**
**F-22140 Begard(FR)**
Inventeur: **Guilloux, Jean-Yvon, 12 Chemin de**
**Convenant Ar Groas, F-22560 Trebeurden(FR)**

(74) Mandataire: **Mongrédien, André et al, c/o**
**BREVATOME 25, rue de Ponthieu, F-75008 Paris(FR)**

ACTORUM AG

**Description**

La présente invention concerne un dispositif de focalisation d'un faisceau de lumière. Elle s'applique notamment à la réalisation de machines à souder les fibres optiques.

Des dispositifs de focalisation de faisceaux de lumière, utilisés pour la soudure de fibres optiques, sont déjà connus par les articles de K. KINOSHITA et al., publiés dans la revue APPLIED OPTICS vol.18, n° 19, octobre 1979, p.3256 à 3260 et vol.21 n° 19, octobre 1982, p.3419 à 3422, et par l'article de L. RIVOALLAN et al., publié dans la revue ELECTRONICS LETTERS, vol.19 n° 2, janvier 1983, p.54 et 55.

Ces dispositifs connus utilisent des éléments optiques (lentilles ou miroirs paraboliques convergents) à symétrie de révolution autour d'un axe. De tels éléments transforment un faisceau de lumière de section transversale circulaire en un faisceau du même type et donnent, à partir de ce faisceau de lumière, une tache focale dont la section transversale est également circulaire.

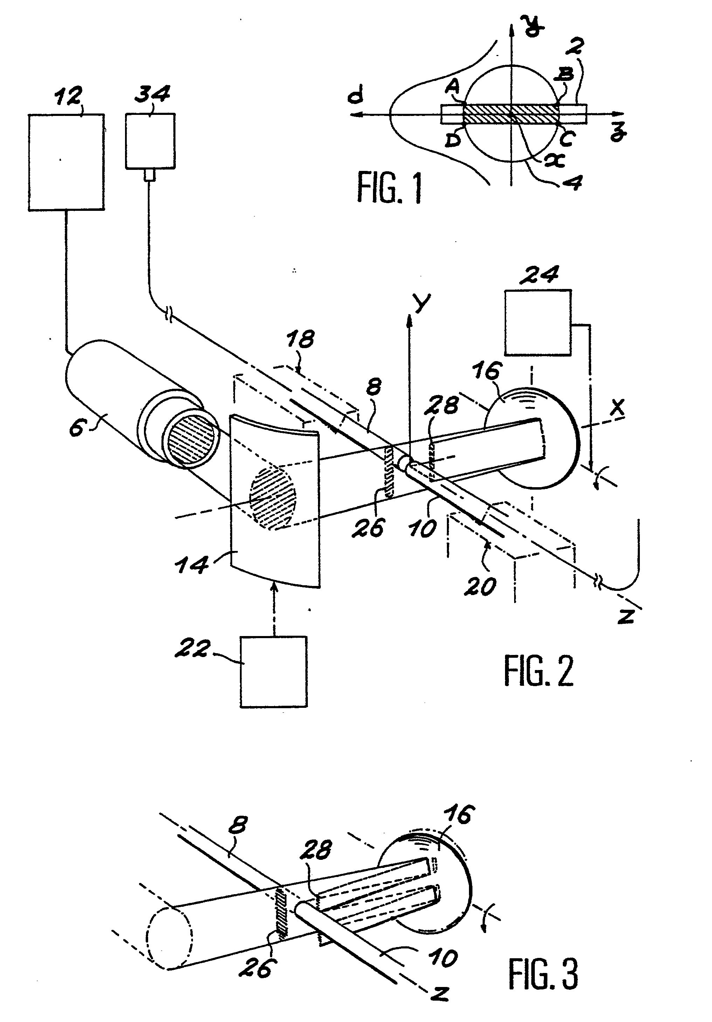

On voit sur la figure 1 qu'une portion de fibre optique 2 d'axe z, placée dans un tel faisceau 4 dont l'axe x est perpendiculaire à l'axe z, absorbe une puissance fonction de l'intégrale de surface, prise à l'intérieur du rectangle curviligne ABCD, de la densité de puissance d dans le faisceau, le rectangle ABCD étant la trace de la fibre dans un plan de coupe transversale du faisceau.

Or, la soudure de fibres optiques est généralement effectuée au moyen d'un laser pour lequel la courbe des variations de la densité de puissance d, en fonction de l'écartement de l'axe x du faisceau produit par ce laser, est gaussienne.

La puissance reçue par la fibre lorsque celleci s'éloigne de l'axe x du faisceau, le long d'un axe y perpendiculaire aux axes x et z et rencontrant ceuxci, diminue très vite, en raison de la diminution de l'aire du rectangle ABCD et de la densité d résultant de l'éloignement de la fibre.

La température atteinte par la fibre dépend ainsi fortement de la qualité du positionnement de cette fibre selon l'axe y. Or, les fibres, dans une machine destinée à leur soudure et munie d'un dispositif connu de focalisation, sont généralement maintenues par serrage de leur gaine protectrice en matière plastique et le centrage d'une fibre dans sa gaine protectrice n'est pas toujours suffisamment correct pour conférer à cette fibre une bonne tolérance de positionnement selon l'axe y défini plus haut.

En vue de réduire l'influence de cette tolérance, on peut augmenter le diamètre du faisceau laser mais ceci conduit à une forte augmentation de la puissance du laser pour atteindre la température de soudure des fibres ainsi qu'à un allongement de la partie chauffée de ces fibres, ce qui nuit à la qualité mécanique de la soudure.

La présente invention a pour but de remédier aux inconvénients précédents en proposant un dispositif de focalisation d'un faisceau de lumière auquel un objet, tel que l'ensemble constitué par les extrémités de deux fibres optiques que l'on désire souder, est destiné à être exposé, dispositif qui permet un positionnement assez grossier suivant un axe perpendiculaire au faisceau, sans nécessiter un faisceau de forte puissance lorsque l'objet doit être chauffé par ce faisceau.

De façon précise, la présente invention a pour objet un dispositif de focalisation d'un faisceau de lumière, comprenant un premier moyen optique prévu pour focaliser le faisceau en formant à partir de celui-ci une tache focale et un second moyen optique disposé en regard du premier et prévu pour donner de cette tache focale une tache-image en regard de celle-ci, caractérisé en ce que le premier moyen optique est prévu pour former une tache focale de forme allongée suivant un axe et en ce que le second moyen optique est prévu pour donner de cette tache focale une tache-image sensiblement parallèle à ladite tache focale, de façon à disposer d'une bonne tolérance de positionnement, selon ledit axe, d'un objet destiné à être exposé au faisceau, entre les taches.

Avec un tel dispositif, la tolérance de positionnement de l'objet suivant ledit axe est peu stricte, du fait de l'obtention d'une tache focale de forme allongée et non pas circulaire, et donc d'un «plateau», et non pas d'un «pic» de densité de puissance lumineuse suivant ledit axe, comme cela se produit dans les dispositifs connus.

Le dispositif objet de l'invention, que l'on peut appeler «four optique», est parfaitement adapté à la soudure de fibres optiques.

Selon un mode de réalisation préféré de ce dispositif, le second moyen optique est orienté de façon que la tache-image soit décalé par rapport à la tache focale, sensiblement suivant ledit axe.

Un tel décalage entraîne également un déplacement, sensiblement suivant ledit axe, de l'image que donne de l'objet le second moyen optique, ce qui permet d'exposer l'objet au faisceau de façon bilatérale et homogène.

Dans son application à la soudure de fibres optiques, ce mode de réalisation préféré permet avantageusement un chauffage bilatéral et homogène des extrémités des fibres que l'on désire souder l'une à l'autre, ce qui évite de soumettre ces fibres à des contraintes thermiques et de les fragiliser.

Selon un mode de réalisation particulier du dispositif objet de l'invention, le premier moyen optique est un miroir cylindro-parabolique convergent.

Par "miroir cylindro-parabolique", on entend un miroir épousant la forme d'un cylindre dont les génératrices s'appuient sur un arc de parabole. Un tel miroir se comporte ainsi comme un "miroir parabolique" (focalisant lorsqu'il est convergent), dans un plan perpendiculaire aux génératrices, et comme un "miroir plan" (réfléchissant simplement un faisceau lumineux) dans un plan parallèle à ces génératrices.

Selon un autre mode de réalisation particulier, le second moyen optique comprend un miroir sphérique convergent.

La présente invention concerne également une machine à souder une extrémité d'une fibre optique à une extrémité d'une autre fibre optique, cette machine comprenant une source de lumière apte à chauffer les extrémités des fibres, des moyens de positionnement et de maintien de ces extrémités l'une contre l'autre et un dispositif de focalisation de la lumière au voisinage desdites extrémités, machine caractérisée en ce que le dispositif de focalisation est conforme au dispositif de la présente invention, ledit objet étant l'ensemble constitué par les extrémités des fibres.

La présente invention sera mieux comprise à la lecture de la description qui suit, d'exemples de réalisation donnés à titre purement indicatif et nullement limitatif, en référence aux dessins annexés sur lesquels la figure 1, déjà décrite, représente une fibre optique exposée à un faisceau de section transversale circulaire dans un dispositif de focalisation connu, et les figures 2 et 3 sont des vues schématiques de modes de réalisation particuliers d'une machine a souder les fibres optiques selon la présente invention.

Sur la figure 2, on a représenté schématiquement un mode de réalisation particulier d'une telle machine, qui comprend :
- une source de lumière 6, apte à chauffer des extrémités respectives de fibres optiques 8 et 10 que l'on désire souder l'une à l'autre, cette source étant par exemple un laser monomode transverse à $CO_2$ qui est relié à une unité d'alimentation et de modulation 12,
- un premier moyen optique constitué par un miroir cylindro-parabolique concave 14 qui est tourné vers les fibres et "hors d'axe" (ou "off axis" selon la terminologie anglo-saxonne), c'est-à-dire qui ne rencontre pas les axes des paraboles sur lesquelles s'appuie le miroir,
- un second moyen optique constitué par un miroir sphérique concave 16 tourné vers les fibres et,
- des moyens 18 et 20 permettant de maintenir et de positionner respectivement les fibres 8 et 10, ces moyens 18 et 20 comportant par exemple chacun un vé en acier inoxydable dur et magnétique, dans lequel la fibre correspondante est maintenue au moyen d'un caoutchouc magnétique.

Les vés 18 et 20 sont placés en regard l'un de l'autre de telle façon que les axes des coeurs des fibres 8 et 10, qui sont maintenues sur ces vés, puissent être alignés suivant un axe Z.

L'axe du miroir sphérique 16 coïncide avec un axe X perpendiculaire à l'axe Z et rencontrant ce dernier en un point situé entre les deux vés tandis que le centre du miroir 16 coïncide avec ce point.

Le vé 18 peut être fixe alors que le vé 20 est déplaçable suivant l'axe X, l'axe Z et un axe Y perpendiculaire à ces derniers et passant par leur intersection.

Les miroirs 14 et 16 sont de part et d'autre de l'axe Z et respectivement munis de moyens 22 et 24 d'orientation et de positionnement dans le repère XYZ.

Le miroir cylindro-parabolique 14 est destiné à être orienté de façon que l'axe contenant les foyers des paraboles considérées plus haut soit parallèle à l'axe Y, au voisinage de celui-ci et dans le plan contenant les axes X et Y.

Le laser 6 est disposé de façon à émettre un faisceau de lumière qui soit parallèle à l'axe Z et dont l'axe se trouve dans le plan contenant les axes X et Z, le faisceau réfléchi par le miroir 14, qui en résulte, étant ainsi dirigé suivant l'axe X.

Le miroir cylindro-parabolique 14 focalise le faisceau émis par le laser 6 en formant à partir de ce faisceau un segment focal ou tache focale 26, parallèle à l'axe Y et admettant sensiblement le plan contenant les axes X et Z comme plan de symétrie. Le miroir sphérique 16 donne de cette tache focale 26 une image 28 qui a approximativement les mêmes dimensions que la tache 26, est sensiblement parallèle à l'axe Y et admet sensiblement le plan contenant les axes X et Z comme plan de symétrie.

A titre purement indicatif et nullement limitatif, le miroir cylindro-parabolique 14 a une distance focale de 25 mm et le miroir sphérique 16 a un rayon de courbure de 25 mm ; le miroir cylindro-parabolique 14 est en outre disposé de façon que la tache focale 26 soit quelques millimètres (1 ou 2 millimètres par exemple) des fibres optiques, la tache-image 28 étant alors sensiblement symétrique de la tache focale 26 par rapport au plan contenant les axes Y et Z ; enfin, le diamètre du faisceau émis par le laser 6 est de l'ordre de 2 mm, de sorte que la hauteur de la tache focale 26, qui est sensiblement égale au diamètre du faisceau laser, vaut également 2 mm environ, tandis que la largeur de cette tache 26 est de l'ordre de 30 μm.

Le réglage de la machine qui est représentée sur la figure 2 et incorpore le four optique comportant les miroirs 14 et 16, est effectué de la façon suivante : on place une fibre optique unique, appelée "fibre-test", à la fois sur le vé 18 et le vé 20, après avoir ôté la gaine protectrice de cette fibre. On déplace le miroir 14 suivant l'axe X de façon que la tache focale 26 qu'il produit se trouve au voisinage de la fibre-test, cette fibre prenant alors une teinte orangée, le positionnement du miroir 14 étant contrôlé au moyen d'un microscope binoculaire par exemple. On fixe ensuite le miroir cylindro-parabolique 14 et l'on met en place le miroir sphérique 16 que l'on règle de façon que la tache-image 28 qu'il produit soit sensiblement symétrique de la tache 26 par rapport à la fibre-test, cette dernière émettant alors une lumière blanche du fait de l'augmentation de son chauffage.

On met alors en place les fibres optiques 8 et 10, on dispose l'une contre l'autre leurs extrémités respectives dont on veut réaliser la soudure, après avoir ôté leurs gaines protectrices, et l'on s'assure que ces extrémités sont correctement placées par rapport aux taches 26 et 28 à l'aide du microscope.

On optimise enfin l'alignement des coeurs des fibres optiques en utilisant une technique de rétro-diffusion par exemple. A cet effet, on monte un appareil de rétro-diffusion 34 à l'autre extrémité de la fibre 8 qui, de façon connue, permet d'envoyer un faisceau lumineux dans la fibre 8, faisceau qui est injecté dans l'autre fibre 10 et qui se réfléchit sur l'autre extrémité de cette fibre 10, agissant comme un miroir, pour être détecté par l'appareil 34. L'injection dans la fibre 10 est optimale lorsque l'alignement est correct.

Dans la disposition des fibres, représentée sur la figure 2, l'image que donne le miroir sphérique 16 des extrémités de ces fibres que l'on veut souder l'une à l'autre, occulte la tache-image 28 de telle sorte que le chauffage des fibres n'est pas totalement bilatéral et homogène.

Pour remédier à cet inconvénient, on effectue une légère rotation du miroir sphérique 16 autour d'un axe parallèle à l'axe Z et passant par le sommet du miroir 16 par exemple, ou l'on déplace légèrement ce miroir sphérique 16 parallèlement à l'axe Y, de façon que l'image des extrémités des fibres soit décalée à peu près parallèlement à l'axe Y. On a ainsi effectivement, respectivement de part et d'autre des fibres, une portion de tache focale et une portion de tache-image et le chauffage de ces fibres est alors bilatéral et homogène.

Pour des fibres de 125 microns de diamètre extérieur, il suffit de décaler les images de leurs extrémités que l'on désire souder l'une à l'autre d'environ 150 microns parallèlement à l'axe Y.

Pour de telles fibres, on peut vérifier que la tolérance de positionnement suivant cet axe Y est supérieure à 200 microns. Cette tolérance est acquise tout en conservant une puissance assez faible pour le laser monomode, à savoir une puissance de l'ordre de 3W, qui est compatible avec la plupart des lasers à $CO_2$ classiques commercialement disponibles.

## Revendications

1. Dispositif de focalisation d'un faisceau de lumière, comprenant un premier moyen optique (14) prévu pour focaliser le faisceau en formant à partir de celui-ci une tache focale (26) et un second moyen optique (16) disposé en regard du premier et prévu pour donner de cette tache focale une tache-image (28) en regard de celle-ci, caractérisé en ce que le premier moyen optique est prévu pour former une tache focale de forme allongée suivant un axe (Y) et en ce que le second moyen optique est prévu pour donner de cette tache focale une tache-image sensiblement parallèle à ladite tache focale, de façon à disposer d'une bonne tolérance de positionnement, selon ledit axe, d'un objet destiné à être exposé au faisceau, entre les taches.

2. Dispositif selon la revendication 1 caractérisé en ce que le second moyen optique (16) est muni de moyens d'orientation et/ou de positionnement de façon que la tache-image (28) puisse être décalée par rapport à la tache focale (26) sensiblement suivant ledit axe (Y).

3. Dispositif selon l'une quelconque des revendications 1 et 2, caractérisé en ce que le premier moyen optique comprend un miroir cylindro-parabolique convergent (14) hors d'axe.

4. Dispositif selon l'une quelconque des revendications 1 à 3, caractérisé en ce que le second moyen optique comprend un miroir sphérique convergent (16).

5. Machine à souder une extrémité d'une fibre optique (8) à une extrémité d'une autre fibre optique (10), cette machine comprenant une source de lumière (6) apte à chauffer les extrémités des fibres, des moyens (18, 20) de positionnement et de maintien de ces extrémités l'une contre l'autre et un dispositif (14, 16) de focalisation de la lumière au voisinage desdites extrémités, machine caractérisée en ce que le dispositif de focalisation est conforme à l'une quelconque des revendications 1 à 4, ledit objet étant l'ensemble constitué par les extrémités des fibres et la tache focale étant perpendiculaire à l'axe des fibres.

6. Machine selon la revendication 5, caractérisée en ce que la source comprend un laser (6).

## Claims

1. Device for focussing a light beam, comprising a first optical means (14) for focussing the beam whilst forming therefrom a focal spot (26) and a second optical means (16) facing the first optical means and which gives said focal spot an image spot (28) facing the latter, characterized in that the first optical means serves to form an elongated focal spot along an axis (Y) and in that the second optical means serves to give said focal spot an image spot substantially parallel to said focal spot so as to have a very good positioning tolerance along said axis of an object which is to be exposed to the beam between the spots.

2. Device according to claim 1, characterized in that the second optical means (16) is provided with orienting and/or positioning means, so that the image spot (28) can be displaced with respect to the focal spot (26) substantially along the axis (Y).

3. Device according to either of the claims 1 and 2, characterized in that the first optical means comprises an off axis convergent cylindroparabolic mirror (14).

4. Device according to any one of the claims 1 to 3, characterized in that the second optical means comprises a convergent spherical mirror (16).

5. Machine for welding one end of an optical fibre (8) to one end of another optical fibre (10), said machine comprising a light source (6) able to heat the ends of the fibres, means (18, 20) for positioning and holding said ends against one another and a device (14, 16) for focussing light in the vicinity of said ends, characterized in that the focussing device is in accordance with any one of the claims 1 to 4, said object being the assembly constituted by the ends of the fibres and the focal spot is perpendicular to the axis of the fibres.

6. Machine according to claim 5, characterized in that the source comprises a laser (6).

## Patentansprüche

1. Vorrichtung zum Fokussieren eines Lichtbündels, mit einer ersten optischen Einrichtung (14), für das Fokussieren des Bündels unter Bildung ausgehend von diesem eines Brennpunktflecks (26) und einer zweiten optischen Einrichtung (16), die gegenüber der ersten angeordnet und vorgesehen ist, um diesem Brennpunktsfleck einen Bildfleck (28) gegenüberliegend von diesem zu geben, dadurch gekennzeichnet, daß die erste optische Einrichtung vorgesehen ist, um einen Brennpunktsfleck von länglicher Form entlang einer Achse (Y) zu bilden und daß die zweite optische Einrichtung vorgesehen ist, um diesem Brennpunktsfleck einen Bildfleck zu geben, der im wesentlichen parallel zum Brennpunktsfleck ist, derart, daß eine gute Einstelltoleranz entlang der genannten Achse eines Objektes geschaffen wird, das dazu bestimmt ist, dem Bündel zwischen den Flecken ausgesetzt zu werden.

2. Vorrichtung nach Anspruch 1, dadurch gekennzeichnet, daß die zweite optische Einrichtung (16) mit Ausricht- und/oder Einstelleinrichtungen derart versehen ist, daß der Bildfleck (28) bezüglich dem Brennpunktsfleck (26) im wesentlichen gemäß der genannten Achse (Y) verschoben sein kann.

3. Vorrichtung nach Anspruch 1 oder 2, dadurch gekennzeichnet, daß die erste optische Einrichtung einen zylinder-parabolischen, außerhalb der Achse konvergierenden Spiegel (14) aufweist.

4. Vorrichtung nach einem der Ansprüche 1 bis 3, dadurch gekennzeichnet, daß die zweite optische Einrichtung einen sphärischen konvergierenden Spiegel (16) aufweist.

5. Maschine zum Verschweißen eines Endes einer optischen Phase (8) mit einem Ende einer anderen optischen Phase (10), wobei diese Maschine eine Lichtquelle (6), die geeignet ist, die Enden der Fasern aufzuheizen, Positionierungs- und Halteeinrichtungen (18, 20) dieser Enden, des einen gegen das andere, und eine Vorrichtung (14, 16) zum Fokussieren des Lichts in der Nähe der genannten Enden aufweist, dadurch gekennzeichnet, daß die Vorrichtung zum Fokussieren konform ist mit einem der Ansprüche 1 bis 4, wobei das genannte Objekt die durch die Faserenden gebildete Anordnung ist, und der Brennpunktsfleck senkrecht zur Faserachse verläuft.

6. Maschine nach Anspruch 5, dadurch gekennzeichnet, daß die Quelle einen Laser (6) aufweist.

FIG. 1

FIG. 2

FIG. 3